# EUROPÄISCHE PATENTSCHRIFT

(11) **EP 3 074 332 B1**
(45) Veröffentlichungstag und Bekanntmachung des Hinweises auf die Patenterteilung: **13.12.2017**
(21) Anmeldenummer: 14781545.0
(22) Anmeldetag: 08.10.2014
(51) Int. Cl.: B65G 47/82, B65G 47/84

(54) **TRANSPORTVORRICHTUNG MIT PFADUMSCHALTUNG**
TRANSFER DEVICE WITH PATH SWITCHING FUNCTION
DISPOSITIF DE TRANSPORT À CHANGEMENT DE TRAJET

(30) Priorität: 25.11.2013 DE 102013223977
(43) Veröffentlichungstag der Anmeldung: 05.10.2016
(73) Patentinhaber: Robert Bosch GmbH, 70442 Stuttgart (DE)
(72) Erfinder: MAYER, Ulrich, 74564 Crailsheim (DE)
(86) Internationale Anmeldenummer: PCT/EP2014/071483
(87) Internationale Veröffentlichungsnummer: WO 2015/074801

(56) Entgegenhaltungen:
- WO-A1-01/30674
- DE-A1- 2 704 614
- DE-A1- 2 806 058
- DE-A1- 2 853 696
- GB-A- 2 155 626
- JP-A- H11 171 332
- US-A- 4 125 184

## Beschreibung

Die Druckschritt US 4,125,184 A offenbart eine Transportvorrichtung gemäß dem Oberbegriff des unabhängigen Patentanspruchs 1.

Der Erfindung liegt die Aufgabe zu Grunde, eine Transportvorrichtung zu schaffen, bei welcher auf besonders einfache und zuverlässige Art und Weise ein Umschalten eines Transportpfades möglich ist.

Die der Erfindung zu Grunde liegende Aufgabe wird bei einer Transportvorrichtung erfindungsgemäß mit den Merkmalen des unabhängigen Patentanspruches 1 gelöst. Vorteilhafte Weiterbildungen sind Gegenstand der abhängigen Ansprüche.

### Offenbarung der Erfindung

Die erfindungsgemäße Transportvorrichtung mit den Merkmalen des Anspruchs 1 weist demgegenüber den Vorteil auf, dass eine Pfadverzweigung eines Transportpfades an zwei Sternrädern möglich ist. Die Pfadverzweigung ist dabei kostengünstig und einfach realisierbar und eine Richtungsänderung vom ersten zum zweiten Pfad oder entgegengesetzt kann ohne Anhalten der Sternräder ausgeführt werden. Erfindungsgemäß umfasst die Transportvorrichtung eine Pfadumschalteinrichtung zum Umschalten eines Förderpfads mit einem Basisteil und einer ersten und zweiten Backe. Die beiden Backen definieren zwischen sich einen Transportpfad bzw. eine Transportfläche, durch welchen die zu transportierenden Behältnisse geführt werden. Ferner umfasst die Pfadumschalteinrichtung ein Schwenklager, um das Basisteil um eine Drehachse zu schwenken. Die Drehachse ist dabei parallel zu einer ersten und zweiten Mittelachse der beiden Sternräder. Somit schwenkt erfindungsgemäß die Pfadumschalteinrichtung einer Ebene parallel zu einer Sternradebene, so dass ein schnelles und sicheres Umschalten des Transportpfades gewährleistet ist.

Weiter ist erfindungsgemäß eine erste Länge der Transportfläche von der Drehachse der Pfadumschalteinrichtung in Axialrichtung zu einem Austrittsbereich kürzer als die Umfangslänge der Aufnahmeteilung des ersten Sternrads.

Um einen stabilen Schwenkvorgang sicherzustellen, ist zusätzlich erfindungsgemäß die erste Länge von der Drehachse zum Austrittsbereich größer als eine zweite Länge von der Drehachse zum Eintrittsbereich. Ferner kann dadurch sichergestellt werden, dass ein Eintrittsbereich der Pfadumschalteinrichtung nur in einem kleinen Umfang geschwenkt wird. Die Drehachse der Pfadumschalteinrichtung ist demnach nicht an einem äußersten Rand der Pfadumschalteinrichtung angeordnet, sonder mitten im Bauteil. Die Unteransprüche zeigen bevorzugte Weiterbildungen der Erfindung.

Die Pfadumschalteinrichtung umfasst vorzugsweise einen sich verjüngenden Einlaufbereich, welcher durch die erste und zweite Backe gebildet ist. Der Einlaufbereich dient dabei zum Führen des Behältnisses auf die Pfadumschalteinrichtung. Der sich verjüngende Einlaufbereich ist besonders bevorzugt durch sich konisch annähernde Backenwände der ersten und zweiten Backe gebildet.

Weiter bevorzugt liegt die Drehachse der Pfadumschalteinrichtung außerhalb des ersten und zweiten Teilkreises der Sternräder. Hierdurch wird das zu transportierende Behältnis aus dem ersten Sternrad entnommen und kann dann tangential entweder auf das erste Sternrad zurück übergeben werden oder tangential auf das zweite Sternrad übergeben werden. Hierdurch kann eine sichere Führung und Übergabe der Behälter auf und von der Pfadumschalteinrichtung sichergestellt werden.

Weiter bevorzugt ist die Pfadumschalteinrichtung in einer zweiten Ebene unterhalb einer ersten Ebene, welche das erste und zweite Sternrad umfasst, angeordnet. Dadurch kann eine einfache und sichere Führung des Behältnisses ermöglicht werden, ohne dass die Gefahr besteht, dass das Behältnis nach unten durchrutscht.

Gemäß einer weiter bevorzugten Ausgestaltung der Erfindung umfasst die Transportvorrichtung ferner einen Antrieb, um die Pfadumschalteinrichtung um die Drehachse zu schwenken, und eine Steuereinheit, welche den Antrieb ansteuert, um eine Umschaltung des Förderpfads durch die Pfadumschalteinrichtung auszuführen.

Weiter bevorzugt umfasst die Transportvorrichtung eine Schlechtteile-Erkennungseinheit, welche Schlechtteile unter den Behältern am ersten Sternrad erkennt. Die Steuereinheit ist dabei eingerichtet, basierend auf einem Signal der Schlechtteile-Erkennungseinheit, die Pfadumschalteinrichtung zu schalten. Hierdurch kann ein automatisiertes Ausschleusen von Schlechtteilen vom ersten Sternrad auf das zweite Sternrad erfolgen.

Alternativ kann die Steuereinheit auch beispielsweise basierend auf einem Zählsignal, welche die mit dem ersten Sternrad transportierten Behälter zählt, eine Umschaltung der Pfadumschalteinrichtung bewirken. Dies kann beispielsweise dann erfolgen, wenn am ersten Sternrad und am zweiten Sternrad jeweils eine separate Verpackungsstation vorhanden ist, bei welcher immer nur eine vorbestimmte, abgezählte Menge von Behältern in eine vorbestimmte Verpackung eingepackt werden sollen. Alternativ können die Behälter auch in eine Magazineinrichtung oder dergleichen über den ersten und zweiten Förderpfad zugeführt werden.

Weiter bevorzugt beträgt ein Schwenkwinkel der Pfadumschalteinrichtung 20° bis 40°, insbesondere 30°. Weiter bevorzugt schließt sich ein geradliniger Führungsbereich dem sich verjüngenden Eintrittsbereich an der Pfadumschalteinrichtung an.

Die erfindungsgemäße Transportvorrichtung wird insbesondere in Abfüll- und/oder Verpackungsmaschinen verwendet, insbesondere im pharmazeutischen Bereich. Durch den robusten Aufbau der erfindungsgemäßen Transportvorrichtung kann insbesondere eine schnelle und einfache Reinigung der Abfüllmaschine ermöglicht werden, ohne dass dabei Beschädigungen an einzelnen Bauteilen der Transportvorrichtung auftreten.

Die erfindungsgemäße Transportvorrichtung wird weiter bevorzugt zum Transport von Vials oder anderen glasförmigen Behältnissen verwendet.

### Zeichnung

Nachfolgend wird unter Bezugnahme auf die begleitende Zeichnung ein bevorzugtes Ausführungsbeispiel der Erfindung im Detail beschrieben. In der Zeichnung ist:
- Figur 1: eine schematische Draufsicht einer Transportvorrichtung gemäß einem bevorzugten Ausführungsbeispiel der Erfindung,
- Figur 2: eine schematische Seitenansicht der Transportvorrichtung von Figur 1,
- Figur 3: eine perspektivische Ansicht der Transportvorrichtung von Figur 1,
- Figur 4: eine schematische Darstellung der Pfadumschalteinrichtung, und
- Figur 5: eine schematische Draufsicht der Pfadumschalteinrichtung.

### Bevorzugte Ausführungsform der Erfindung

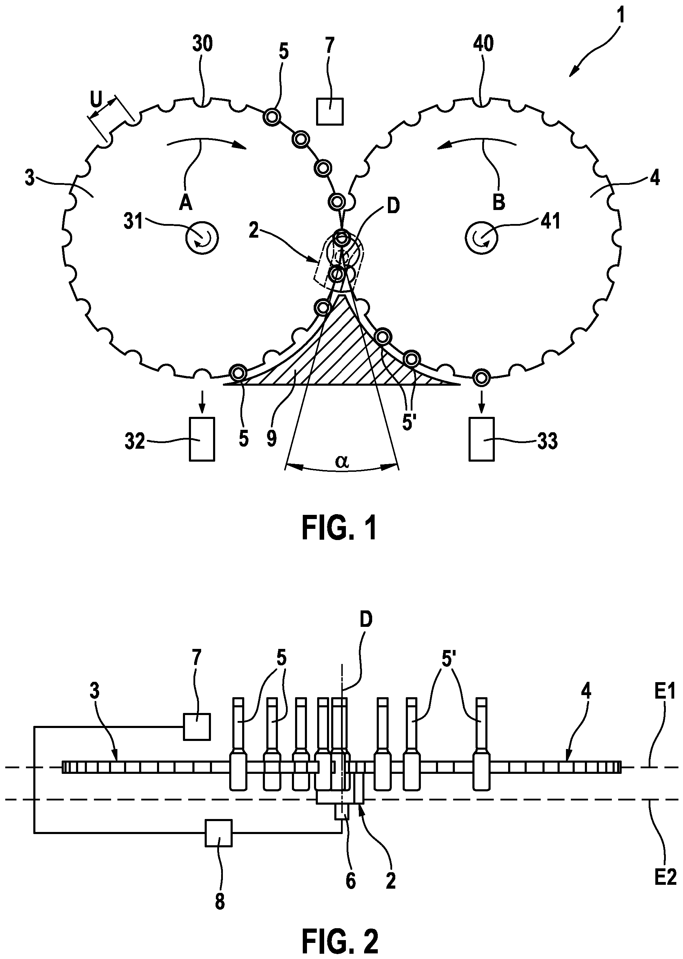

Nachfolgend wird unter Bezugnahme auf die Figuren 1 bis 5 eine Transportvorrichtung 1 gemäß einem bevorzugten Ausführungsbeispiel der Erfindung im Detail beschrieben.

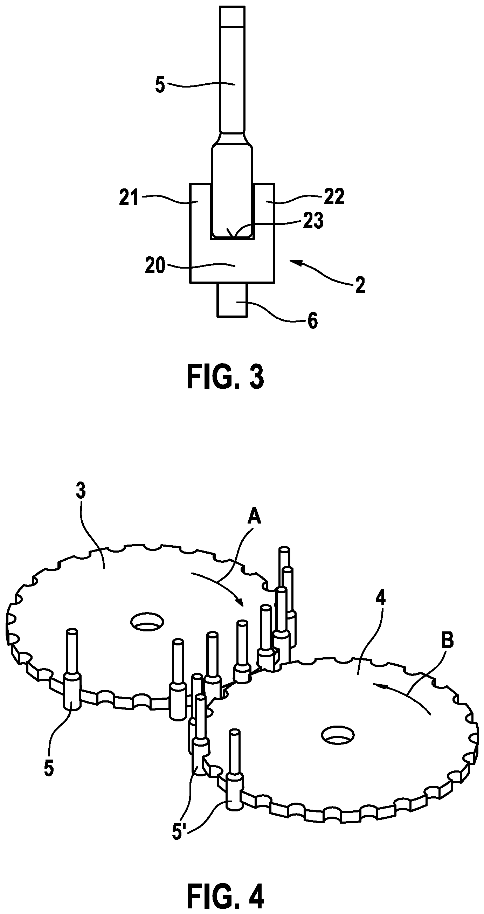

Wie aus Figur 1 und 3 ersichtlich ist, umfasst die Transportvorrichtung 1 ein erstes Sternrad 3 und ein zweites Sternrad 4. Die Transportvorrichtung 1 dient hierbei zum Transport von pharmazeutischen Behältern 5, welche in diesem Ausführungsbeispiel als Vials ausgebildet sind.

Die pharmazeutischen Behälter 5 werden über eine nicht gezeigte weitere Transportvorrichtung zu dem ersten Sternrad 3 zugeführt. Das erste Sternrad 3 dreht sich dabei in Richtung des Pfeils A. Die Behälter 5 werden dabei an einer Prüfeinrichtung 7 vorbeigeführt, welche beispielsweise einen Füllgrad der Behälter 5 mit einem z.B. pulverförmigen Medikament oder dergleichen, überprüft. Wenn die Befüllung der Behälter 5 in Ordnung ist, werden die Behälter 5 zu einer Abgabestation 32 am ersten Sternrad 3 transportiert und dort beispielsweise zu einer Verpackungseinheit weitertransportiert. Somit bildet der Transport auf dem ersten Sternrad 3 einen ersten Transportpfad für die Behälter 5.

Wie weiter aus Figur 1 und 3 ersichtlich ist, dreht sich das zweite Sternrad 4 entgegengesetzt zum ersten Sternrad 3 in Richtung des Pfeils B. Durch eine Übergabe von Behältern 5 vom ersten Sternrad 3 zum zweiten Sternrad 4 kann hierdurch ein zweiter Transportpfad definiert werden. Über den zweiten Transportpfad können beispielsweise Schlechtteile, welche mittels der Prüfeinrichtung 7 bestimmbar sind, in den zweiten Transportpfad ausgegliedert werden. Hierzu ist eine Pfadumschalteinrichtung 2 vorgesehen, welche zwischen dem ersten Transportpfad und dem zweiten Transportpfad umschalten kann, so dass Behälter 5 jeweils über den ersten oder zweiten Transportpfad geführt werden.

Die Pfadumschalteinrichtung 2 ist, wie insbesondere aus den Figuren 2 und 4 ersichtlich, unterhalb einer ersten Ebene E1 der Sternräder 3, 4 in einer zweiten, parallelen Ebene E2 angeordnet. Die Pfadumschalteinrichtung 2 kann dabei genau nur zwei Positionen einnehmen, nämlich eine Förderung der Behälter 5 auf den ersten Transportpfad am ersten Sternrad 3 oder eine Förderung der Behälter 5 über den zweiten Transportpfad, wobei eine Übergabe vom ersten Sternrad 3 auf das zweite Sternrad 4 erfolgt.

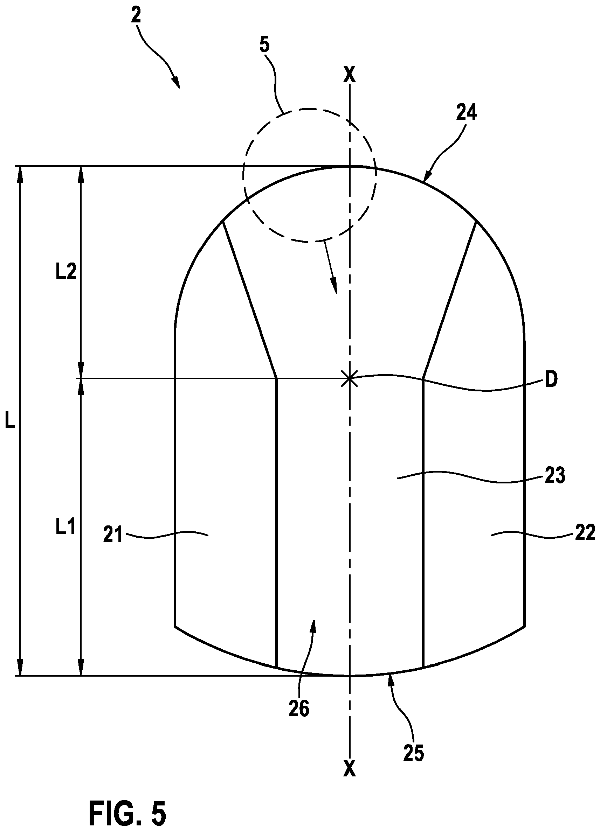

Die Pfadumschalteinrichtung 2 hat somit die Funktion einer Weiche zum Umschalten zwischen den beiden Transportpfaden. Die Pfadumschalteinrichtung 2 ist im Detail in Figur 5 dargestellt und umfasst ein Basisteil 20, eine erste Backe 21 und eine zweite Backe 22. Zwischen den beiden Backen 21, 22 ist eine Transportfläche 23 ausgebildet, über welche die Behälter 5 geführt werden. Dies ist insbesondere aus Figur 4 ersichtlich. Die Pfadumschalteinrichtung umfasst ferner einen konischen Eintrittsbereich 24, über welchen die Behälter 5 zur Pfadumschalteinrichtung 2 geführt werden, und einen Austrittsbereich 25. Die Pfadumschalteinrichtung 2 kann dabei um eine Drehachse D, welche parallel zu einer ersten Mittelachse 31 und einer zweiten Mittelachse 32 der Sternräder ist, gedreht werden.

Die Drehachse D der Pfadumschalteinrichtung 2 liegt dabei außerhalb des ersten und zweiten Teilkreises der Sternräder 3, 4. Eine Übergabe von der Pfadumschalteinrichtung 2 auf das erste oder zweite Sternrad erfolgt dabei tangential. Der Pfadumschalteinrichtung 2 nachgeschaltet ist ein Führungselement 9 zur Führung der übergebenen Behälter.

Die Pfadumschalteinrichtung 2 kann dabei mittels eines Antriebs 6 geschaltet werden, welcher mit einer Steuereinheit 8 verbunden ist. Die Prüfeinrichtung 7, welche einen Füllgrad der Behälter überprüft, ist ebenfalls mit der Steuereinheit 8 verbunden.

Wenn nun die Prüfeinrichtung 7 bestimmt, dass ein Füllgrad eines Behälters 5 unterhalb eines vorbestimmten Wertes liegt, aktiviert die Steuereinheit 5 den Antrieb 6, so dass die Pfadumschalteinrichtung 2 von der in Figur 1 gezeigten ersten Stellung in eine zweite Stellung schwenkt. Dadurch kann der schlecht gefüllte Behälter 5' zum zweiten Sternrad 4 übergeleitet werden und zu einem Ausschussbehälter 33 oder dergleichen geführt werden. Wenn der im ersten Sternrad 3 nachfolgende Behälter 5 wieder die richtige Füllmenge aufweist, schaltet die Pfadumschalteinrichtung 2 wieder in die erste Ausgangsposition zurück, so dass der nachfolgende Behälter 5 wieder zur Abgabestation 32 gefördert wird.

Wie aus Figur 5 ersichtlich ist, ist der Drehpunkt D der Pfadumschalteinrichtung 2 in Axialrichtung X-X näher am konischen Eintrittsbereich 24 angeordnet als am Austrittsbereich 25. Somit ist eine erste Länge L1 zwischen Drehachse B und Austrittsbereich 25 größer als eine zweite Länge L1 zwischen Drehachse D und Eintrittsbereich 24. Weiterhin ist in diesem Ausführungsbeispiel eine Gesamtlänge L der Pfadumschalteinrichtung in Axialrichtung X-X länger als eine Umfangslänge U zwischen zwei benachbarten Aufnahmen 30,40 für die Behälter 5 (Teilung). Dadurch ist es möglich, dass schon ein nachfolgender Behälter 5 (in Figur 5 gestrichelt eingezeichnet) auf die Transportfläche 23 geführt wird, während noch ein Umschaltvorgang mittels der Pfadumschalteinrichtung 2 möglich ist. In Axialrichtung X-X der Pfadumschalteinrichtung ist der Drehpunkt D dabei auf Höhe des Übergangs zwischen dem konischen Bereich 24 zum geradlinigen Führungsbereich 26 angeordnet.

Somit kann erfindungsgemäß ein Umschalten von einem ersten Transportpfad auf einen zweiten Transportpfad mittels einer kurzen Drehbewegung ausgeführt werden, wobei die Pfadumschalteinrichtung 2 einen sehr einfachen und robusten Aufbau aufweist. Insbesondere ist eine sehr gute Reinigung der Pfadumschalteinrichtung 2 möglich. Wie beschrieben, kann der zweite Transportpfad dabei zum Aussortieren von Schlechtteilen verwendet werden oder alternativ auch zum Verteilen der Behälter 5, beispielsweise auf zwei parallele Packstationen. Durch die Verwendung der beiden Sternräder 3, 4 bleiben die Behälter 5 insbesondere auch auf ihrer gewählten Teilung. Im Vergleich mit einem Auswurffinger erfolgt erfindungsgemäß ein sehr schonender Transport der Behälter 5 auch im Übergangsbereich der Pfadumschalteinrichtung 2. Somit sind die Behälter 5 im Wesentlichen vor Beschädigungen geschützt. Auch muss keine aufwändige Vakuumanlage oder dergleichen vorgesehen werden. Die erfindungsgemäße Transportvorrichtung 1 wird besonders bevorzugt im Übergang zwischen einer Füll- und Verschließmaschine zu einer Außenreinigungsmaschine verwendet. Die Verwendung der Sternräder ermöglicht dabei insbesondere eine direkte Beschickung der Außenreinigungsmaschine.

## Patentansprüche

1. Transportvorrichtung (1), umfassend
- eine Pfadumschalteinrichtung (2) zum Umschalten eines Transportpfades,
- ein erstes Sternrad (3) und
- ein zweites Sternrad (4),
- wobei das erste Sternrad (3) und das zweite Sternrad (4) zum Transport von Behältern (5) eingerichtet sind,
- wobei die Pfadumschalteinrichtung (2) ein Basisteil (20), eine erste Backe (21) und eine zweite Backe (22) umfasst, wobei die beiden Backen (21, 22) zwischen sich eine Transportfläche (23) definieren,
- wobei die Pfadumschalteinrichtung (2) um eine Drehachse (D) schwenkbar ist,
- wobei die Drehachse (D) parallel zu einer ersten Mittelachse (31) des ersten Sternrads (3) und einer zweiten Mittelachse (41) des zweiten Sternrads (4) ist und
- wobei die Pfadumschalteinrichtung (2) eingerichtet ist, bei einer Pfadumschaltung eine Übergabe von Behältern (5) vom ersten Sternrad (3) an das zweite Sternrad (4) zu bewirken, wobei die Behälter (5) über die Transportfläche (23) geführt werden,
**dadurch gekennzeichnet,**
**dass** eine erste Länge (L1) der Transportfläche (23) der Pfadumschalteinrichtung (2) von der Drehachse (D) zu einem Austrittsbereich (25) der Pfadumschalteinrichtung (2) kleiner ist als die Umfangslänge (U) zwischen zwei benachbarten Aufnahmen (30) für die Behälter (5) des ersten Sternrads (3) und dass die erste Länge (L1) der Transportfläche (23) von der Drehachse (D) zum Austrittsbereich (25) größer ist als eine zweite Länge (L2) der Transportfläche (23) von der Drehachse (D) zum Eintrittsbereich (24) der Pfadumschalteinrichtung (2).

2. Vorrichtung (1) nach Anspruch 1, **dadurch gekennzeichnet, dass** die Pfadumschalteinrichtung (2) einen sich verjüngenden Eintrittsbereich (24) aufweist, welcher durch die erste Backe (21) und die zweite Backe (22) definiert ist.

3. Vorrichtung (1) nach Anspruch 2, **dadurch gekennzeichnet, dass** der sich verjüngende Eintrittsbereich (24) sich konisch verjüngt.

4. Vorrichtung (1) nach einem der vorhergehenden Ansprüche, **dadurch gekennzeichnet, dass** die Drehachse (D) der Pfadumschalteinrichtung (2) außerhalb des ersten und zweiten Sternrades (3, 4) liegt.

5. Vorrichtung (1) nach einem der vorhergehenden Ansprüche, **dadurch gekennzeichnet, dass** die Pfadumschalteinrichtung (2) in einer zweiten Ebene (E2) unterhalb einer ersten Ebene (E1), in welcher das erste und zweite Sternrad (3, 4) angeordnet ist, angeordnet ist.

6. Vorrichtung (1) nach einem der vorhergehenden Ansprüche, ferner umfassend einen Antrieb (6), um die Pfadumschalteinrichtung (2) um die Drehachse (D) zu schwenken, und eine Steuereinheit (8), welche den Antrieb (6) ansteuert, um eine Umschaltung der Pfadumschalteinrichtung (2) auszuführen.

7. Vorrichtung nach Anspruch 6, ferner umfassend eine Schlechtteile-Erkennungseinheit (7), welche Schlechtteile am ersten Sternrad (3) erkennt, wobei die Steuereinheit (8) eingerichtet ist, basierend auf einem Signal der Schlechtteile-Erkennungseinheit (7) die Pfadumschalteinrichtung (2) umzuschalten.

8. Vorrichtung (1) nach einem der vorhergehenden Ansprüche, **dadurch gekennzeichnet, dass** ein Schwenkwinkel (α), um welchen die Pfadumschalteinrichtung (2) um den Drehpunkt (D) schwenken kann, in einem Bereich von 20° bis 40° liegt, und insbesondere ungefähr 30° beträgt.

9. Vorrichtung (1) nach einem der Ansprüche 2 bis 8, **dadurch gekennzeichnet, dass** sich an den sich verjüngenden Eintrittsbereich (24) in Transportrichtung ein geradliniger Führungsbereich (26) anschließt.

## Claims

1. Transport device (1), comprising
- a path-switching device (2) for switching a transport path,
- a first star wheel (3) and
- a second star wheel (4),
- wherein the first star wheel (3) and the second star wheel (4) are designed for transporting containers (5),
- wherein the path-switching device (2) comprises a base part (20), a first jaw (21) and a second jaw (22), wherein the two jaws (21, 22) define a transport surface (23) between them,
- wherein the path-switching device (2) is pivotable about an axis of rotation (D),
- wherein the axis of rotation (D) is parallel to a first centre axis (31) of the first star wheel (3) and to a second centre axis (41) of the second star wheel (4), and
- wherein the path-switching device (2) is designed, during path switching, to effect a transfer of containers (5) from the first star wheel (3) to the second star wheel (4), with the containers (5) being guided over the transport surface (23),
**characterized in that** a first length (L1) of the transport surface (23) of the path-switching device (2) from the axis of rotation (D) to an outlet region (25) of the path-switching device (2) is less than the circumferential length (U) between two adjacent receptacles (30) for the containers (5) of the first star wheel (3), and **in that** the first length (L1) of the transport surface (23) from the axis of rotation (D) to the outlet region (25) is greater than a second length (L2) of the transport surface (23) from the axis of rotation (D) to the inlet region (24) of the path-switching device (2).

2. Device (1) according to Claim 1, **characterized in that** the path-switching device (2) has a tapering inlet region (24) which is defined by the first jaw (21) and the second jaw (22).

3. Device (1) according to Claim 2, **characterized in that** the tapering inlet region (24) tapers conically.

4. Device (1) according to one of the preceding claims, **characterized in that** the axis of rotation (D) of the path-switching device (2) is situated outside the first and second star wheel (3, 4).

5. Device (1) according to one of the preceding claims, **characterized in that** the path-switching device (2) is arranged in a second plane (E2) below a first plane (E1) in which the first and second star wheel (3, 4) are arranged.

6. Device (1) according to one of the preceding claims, further comprising a drive (6) in order to pivot the path-switching device (2) about the axis of rotation (D), and a control unit (8) which controls the drive (6) in order to implement a switching of the path-switching device (2).

7. Device according to Claim 6, further comprising a defective-part detection unit (7) which detects defective parts on the first star wheel (3), wherein the control unit (8) is designed, based on a signal from the defective-part detection unit (7), to switch the path-switching device (2).

8. Device (1) according to one of the preceding claims, **characterized in that** a pivot angle (α) through which the path-switching device (2) can pivot about the rotation point (D) lies in a range from 20° to 40°, and is in particular approximately 30°.

9. Device (1) according to one of Claims 2 to 8, **characterized in that** the tapering inlet region (24) is adjoined in the transport direction by a rectilinear guide region (26).

## Revendications

1. Dispositif de transport (1), comprenant
- un appareil d'inversion de trajet (2) destiné à inverser un trajet de transport,
- une première roue étoile (3) et
- une deuxième roue étoile (4)
- la première roue étoile (3) et la deuxième roue étoile (4) étant conçues pour le transport de récipients (5),
- l'appareil d'inversion de trajet (2) comprenant une partie de base (20), une première face (21) et une deuxième face (22), les deux faces (21, 22) définissant entre elles une surface de transport (23),
- l'appareil d'inversion de trajet (2) pouvant pivoter autour d'un axe de rotation (D),
- l'axe de rotation (D) étant parallèle à un premier axe central (31) de la première roue étoile (3) et à un deuxième axe central (41) de la deuxième roue étoile (4) et
- l'appareil d'inversion de trajet (2) étant conçu pour, lors d'une inversion de trajet, provoquer un transfert des récipients (5) de la première roue étoile (3) à la deuxième roue étoile (4), les récipients (5) étant guidés par le biais de la surface de transport (23),
**caractérisé en ce que**
une première longueur (L1) de la surface de transport (23) de l'appareil d'inversion de trajet (2) entre l'axe de rotation (D) et une zone de sortie (25) de l'appareil d'inversion de trajet (2) est inférieure à la longueur circonférentielle (U) entre deux logements (30) voisins pour les récipients (5) de la première roue étoile (3) et
**en ce que** la première longueur (L1) de la surface de transport (23) entre l'axe de rotation (D) et une zone de sortie (25) est supérieure à une deuxième longueur (L2) de la surface de transport (23) entre l'axe de rotation (D) et la zone d'entrée (24) de l'appareil d'inversion de trajet (2).

2. Dispositif (1) selon la revendication 1, **caractérisé en ce que** l'appareil d'inversion de trajet (2) possède une zone d'entrée qui s'effile (24), laquelle est définie par la première face (21) et la deuxième face (22).

3. Dispositif (1) selon la revendication 2, **caractérisé en ce que** la zone d'entrée qui s'effile (24) s'effile de manière conique.

4. Dispositif (1) selon l'une des revendications précédentes, **caractérisé en ce que** l'axe de rotation (D) de l'appareil d'inversion de trajet (2) se trouve en-dehors de la première et de la deuxième roue étoile (3, 4).

5. Dispositif (1) selon l'une des revendications précédentes, **caractérisé en ce que** l'appareil d'inversion de trajet (2) est disposé dans un deuxième plan (E2), au-dessous du premier plan (E1) dans lequel sont disposées les première et deuxième roues étoiles (3, 4).

6. Dispositif (1) selon l'une des revendications précédentes, comprenant en outre un mécanisme d'entraînement (6) destiné à faire pivoter l'appareil d'inversion de trajet (2) autour de l'axe de rotation (D), et une unité de commande (8) qui commande le mécanisme d'entraînement (6) pour réaliser une inversion de l'appareil d'inversion de trajet (2).

7. Dispositif (1) selon la revendication 6, comprenant en outre une unité de reconnaissance de pièces non conformes (7), laquelle reconnaît les pièces non conformes au niveau de la première roue étoile (3), l'unité de commande (8) étant conçue pour inverser l'appareil d'inversion de trajet (2) en se basant sur un signal de l'unité de reconnaissance de pièces non conformes (7).

8. Dispositif (1) selon l'une des revendications précédentes, **caractérisé en ce qu'**un angle de pivotement (α), duquel peut pivoter l'appareil d'inversion de trajet (2) autour du point de rotation (D), est compris dans une plage de 20° à 40°, et est notamment approximativement égal à 30°.

9. Dispositif (1) selon l'une des revendications 2 à 8, **caractérisé en ce qu'**une zone de guidage rectiligne (26) se raccorde à la zone d'entrée qui s'effile (24) dans la direction du transport.
